# EUROPÄISCHE PATENTANMELDUNG

(11) **EP 4 699 780 A1**
(43) Veröffentlichungstag der Anmeldung: **25.02.2026**
(21) Anmeldenummer: 25193044.2
(22) Anmeldetag: 31.07.2025
(51) Int. Cl.: B29C 49/00, B29C 49/22, B29C 49/04, B29K 23/00, B29K 77/00, B29K 105/24, B29L 23/00, B29L 31/00

(54) **HERSTELLUNG VON BLASGEFORMTEN STRUKTUREN FÜR TEMPERIERMEDIEN**

(30) Priorität: 20.08.2024 DE 102024123776
(71) Anmelder: TI Automotive Technology Center GmbH, 76437 Rastatt (DE)
(72) Erfinder: Kizilay, Irfan, 68799 Reilingen (DE); Lindow, Manuel, 76593 Gernsbach (DE); Leipold, Stefan, 67470 Seltz (FR); Roeder, Manuel, 76437 Rastatt (DE)
(74) Vertreter: Andrejewski - Honke Patent- und Rechtsanwälte Partnerschaft mbB

(57) **Zusammenfassung**

Bei einem Verfahren zur Herstellung blasgeformter Strukturen wird ein Vorformling (1) bereitgestellt, wobei der Vorformling (1) einen Hohlraum (3) einschließt und eine den Hohlraum (3) begrenzende Vorformlingswand (2) aufweist. Der Vorformling (1) wird in eine Blasform eingebracht und zu einer blasgeformten Struktur ausgebildet, wobei die blasgeformte Struktur eine Strukturwand aufweist. Die Vorformlingswand bzw. die Strukturwand umfasst eine innere Schicht (4) und eine äußere Schicht (5).

## Beschreibung

Die Erfindung betrifft Verfahren zur Herstellung blasgeformter Strukturen, wobei ein Vorformling bereitgestellt wird, wobei der Vorformling einen Hohlraum einschließt und eine den Hohlraum begrenzende Vorformlingswand aufweist, wobei der Vorformling in eine Blasform eingebracht und zu einer blasgeformten Struktur ausgebildet wird, wobei die blasgeformte Struktur eine Strukturwand aufweist. Die Erfindung betrifft außerdem eine mit diesem Verfahren hergestellte blasgeformte Struktur sowie eine Verwendung der blasgeformten Struktur.

Blasgeformte Strukturen zur Führung eines Temperiermediums sind aus der Praxis bekannt. Hierbei wird in aller Regel ein hohl ausgebildeter, integraler (ohne durchgängige Grenzflächen ausgebildeter) Vorformling in eine Blasform eingebracht und daraufhin mittels Gas- bzw. Luftdruck aufgeblasen, bis aus dem Vorformling eine blasgeformte Struktur an einer Innenseite der Blasform entsteht. Die blasgeformten Strukturen können aufgrund der Vielseitigkeit der möglichen Blasformen für eine Vielzahl an Anwendungen eingesetzt werden. Eine wichtige Anwendung besteht in der Bereitstellung von blasgeformten Strukturen zur Führung eines Temperiermediums und insbesondere einer Wasser-Glykol-Lösung. Die blasgeformten Strukturen können beispielsweise Tanks, komplexe Thermomanagement-Module oder Rohre mit sich in axialer Richtung veränderndem Querschnitt sein.

Allerdings werden diese blasgeformten Strukturen nicht allen Funktionsanforderungen gerecht. Zum Beispiel soll eine blasgeformte Struktur gleichzeitig möglichst schlagzäh und warmformbeständig sein. Der Erfindung liegt daher die Aufgabe zugrunde, dass die blasgeformte Struktur möglichst vielen Funktionsanforderungen, insbesondere im Bereich der Anwendung der Führung von Temperiermedien - gerecht werden soll.

Diese Aufgabe wird gelöst durch ein Verfahren zur Herstellung blasgeformter Strukturen, wobei ein Vorformling bereitgestellt wird, wobei der Vorformling einen Hohlraum einschließt und eine den Hohlraum begrenzende Vorformlingswand aufweist, wobei der Vorformling in eine Blasform eingebracht und zu einer blasgeformten Struktur ausgebildet wird, wobei die blasgeformte Struktur eine Strukturwand aufweist, dadurch gekennzeichnet, dass die Vorformlingswand bzw. die Strukturwand eine innere Schicht und eine äußere Schicht umfasst.

Der Erfindung liegt zunächst die Erkenntnis zugrunde, dass die bisherigen blasgeformten Strukturen - insbesondere im Gegensatz zu extrudierten Strukturen - zwar allen möglichen geometrischen Anforderungen genügen können. Es wurde gefunden, dass die blasgeformten Strukturen den Anforderungen hinsichtlich der mechanischen oder chemischen Eigenschaften oft jedoch nur bedingt genügen. Der Erfindung liegt weiter die Erkenntnis zugrunde, dass durch eine Kombination von Schichten mehrere mechanische bzw. chemische Funktionen bedient werden können. Im Ergebnis wurde die eingangs genannte Aufgabe gelöst.

Der Begriff "Vorformlingswand" meint eine Wand bzw. die Wand des Vorformlings, die den Hohlraum wenigstens teilweise einschließt. Ist der Vorformling beispielsweise als im Querschnitt kreisrundes Rohr ausgebildet, so schließt die Vorformlingswand den Hohlraum vollständig im Querschnitt ein, wohingegen wenigstens eine Stirnseite des Rohrs bzw. Vorformlings offen ausgebildet sein kann. Es ist beispielsweise denkbar, dass beide Stirnseiten des Rohrs beim Einlegen in die Blasform offen ausgebildet sind, wobei beim Schließen der Blasform aufgrund der angewendeten Wärme eine der beiden Stirnseiten des Rohrs geschlossen wird und über die andere Stirnseite das Gas bzw. die Luft eingeblasen wird.

Der Begriff "Strukturwand" meint vorzugsweise eine Wand der blasgeformten Struktur. Es ist bevorzugt, dass die Strukturwand direkt nach dem Blasformen wenigstens eine Öffnung aufweist. Es ist möglich, dass die Zahl der Öffnungen nach dem Blasformen vergrößert wird. Grundsätzlich ist es auch denkbar, dass die wenigstens eine Öffnung direkt nach dem Blasformen in einem späteren Verfahrensschritt geschlossen wird.

Die Begriffe "Vorformlingswand" bzw. "Strukturwand" meinen vorzugsweise, dass deren Schichten mit der jeweils benachbarten Schicht bzw. den jeweils benachbarten Schichten stoffschlüssig miteinander verbunden sind und/oder bevorzugt flächig aneinander anliegen.

Der Begriff "einstückig" meint im Folgenden vorzugsweise, dass der einstückige Körper nur in zerstörender Weise, beispielsweise durch Schneiden, in zwei oder mehr Stücke geteilt werden kann. Als Beispiel der Einstückigkeit mag ein Vorformling in Form eines Rohrs mit mehreren koextrudierten und stoffschlüssig verbundenen Schichten dienen, welches zwar einstückig, nicht aber über die gesamte Rohrwand hinweg integral ausgebildet ist.

Der Begriff "integral" meint bevorzugt einen Körper, welcher keine inneren, durchgängigen Grenzflächen aufweist. Der Ausdruck "innere durchgängige Grenzflächen" meint vorzugsweise solche inneren Grenzflächen, die einen Körper vollständig in wenigstens zwei Bereiche unterteilen, die keine Verbindung jenseits der Grenzflächen aufweisen. Beispielsweise die Grenzflächen der Schichten eines koextrudierten Rohrs sind durchgängige innere Grenzflächen. Für die Herstellung eines integralen Körpers ist zweckmäßigerweise das Erzeugen des Körpers aus lediglich einer Schmelze eine notwendige, aber nicht hinreichende Bedingung. Hierfür ist zweckmäßigerweise ferner notwendig, dass der aus einer Schmelze hergestellte Körper nicht noch um weitere Körper dieser Schmelze ergänzt wird, welche wiederum innere Grenzflächen am Gesamtkörper erzeugen würden, so dass der Gesamtkörper nicht integral ausgebildet wäre.

Folglich ist ein mehrschichtiges, koextrudiertes Rohr bzw. ein mehrschichtiger Vorformling schichtweise integral ausgebildet und insgesamt bzw. über die gesamte Rohrwand bzw. Vorformlingswand hinweg auch einstückig, nicht aber über die gesamte Rohrwand bzw. Vorformlingswand hinweg integral ausgebildet. Eine Schicht eines mehrschichtigen Rohrs ist entlang des Rohrs integral und insbesondere vollständig integral ausgebildet. Der Grund hierfür ist, dass jede der Schichten einer eigenen Schmelze zugeordnet ist. Die verschiedenen Schichten sind zweckmäßigerweise mikroskopisch oder durch andere Bildgebungsverfahren insbesondere an Grenzflächen zwischen den Schichten erkennbar. Der Begriff "integral" umfasst bevorzugt "schichtweise integral" ausgebildete Körper und "vollständig integral" ausgebildete Körper.

Zweckmäßigerweise umschließt die äußere Schicht die innere Schicht. Es ist möglich, dass die äußere Schicht an der inneren Schicht anliegt. Es ist möglich, dass eine weitere Schicht, beispielsweise eine Haftvermittlerschicht, zwischen der inneren Schicht und der äußeren Schicht angeordnet ist. Es ist sehr bevorzugt, dass die innere Schicht die innerste Schicht der Vorformlingswand bzw. der Strukturwand darstellt. Zweckmäßigerweise ist die innere Schicht bzw. innerste Schicht so angeordnet, dass sie in Kontakt mit einem Fluid bzw. Temperiermedium tritt. Die äußere Schicht kann die äußerste Schicht sein.

Gemäß einer bevorzugten Ausführungsform ist die Strukturwand aus der Vorformlingswand entstanden, wobei vorzugsweise die innere Schicht der Strukturwand aus der inneren Schicht der Vorformlingswand und/oder die äußere Schicht der Strukturwand aus der äußeren Schicht der Vorformlingswand entstanden ist. Dies bewirkt, dass die Schichten dem Blasformen unterworfen sind und nicht etwa nach dem Blasformen noch hinzugefügt werden. Hierdurch wird eine effizientere Herstellung erzielt. Vorzugsweise ist die Außenschicht der Strukturwand aus der Außenschicht der Vorformlingswand entstanden. Mit Vorteil ist die Haftvermittlerschicht der Strukturwand aus der Haftvermittlerschicht der Vorformlingswand entstanden. Es ist bevorzugt, dass die Adhäsionsschicht der Strukturwand aus der Adhäsionsschicht der Vorformlingswand entstanden ist.

Besonders vorzugsweise umfasst die innere Schicht der Vorformlingswand bzw. der Strukturwand ein Polyolefin und insbesondere ein Polypropylen. Das Polyolefin bewirkt, dass die innere Schicht gut als Barriere für flüssige Fluide, insbesondere für wasser- und/oder ölhaltige Temperiermedien, beispielsweise für Wasser-Glykol-Lösungen oder ein dielektrisches ölhaltiges Temperiermedium, geeignet ist. Das Polypropylen bewirkt, dass die innere Schicht wärmeformbeständig ist und insbesondere ein aufgeheiztes Temperiermedium gut und insbesondere besser als beispielsweise Polyethylen verträgt. Vorzugsweise beträgt der Gewichtsanteil des Polyolefins bzw. Polypropylens wenigstens 30 bzw. 50 bzw. 70 bzw. 90 % der inneren Schicht.

Gemäß einer sehr bevorzugten Ausführungsform weist die Vorformlingswand bzw. Strukturwand wenigstens 30 bzw. 40 bzw. 50 bzw. 70 Gew.% eines Polyolefins und insbesondere eines Polypropylens auf. Es ist von Vorteil, dass wenigstens zwei der Schichten und vorzugsweise alle der Schichten der Vorformlingswand bzw. Strukturwand ein Polyolefin bzw. Polypropylen umfassen. Hierdurch wird eine insbesondere für Temperiermedien gut geeignete blasgeformte Struktur erreicht, deren Schichten sich durch eine gute Haftung zwischen einander auszeichnen. Die gute Haftung ermöglicht, dass auch nach dem Blasformen ein zuverlässig flächiger Stoffschluss zwischen den Schichten vorliegt.

Vorzugsweise umfasst die Vorformlingswand bzw. Strukturwand lediglich zwei Schichten bzw. lediglich die innere Schicht und die äußere Schicht. Mit Vorteil umfasst das Polyolefin bzw. Polypropylen der inneren Schicht einer zweischichtigen Vorformlingswand bzw. Strukturwand ein Polyolefin- bzw. Polypropylen-Regenerat. Vorzugsweise beläuft sich der Gewichtsanteil des Polyolefin- bzw. Polypropylen-Regenerats auf wenigstens 30 bzw. 50 bzw. 70 bzw. 90 % an der inneren Schicht. Es ist bevorzugt, dass die äußere Schicht der zweischichtigen Vorformlingswand bzw. Strukturwand ein Polyolefin - insbesondere ein Polyethylen, ein Polypropylen, ein thermoplastisches Elastomer auf Olefinbasis und/oder ein olefinhaltiges thermoplastisches Vulkanisat - umfasst. Dies bewirkt eine gute Haftung an der inneren Schicht, so dass auf eine dazwischen liegende Haftvermittlerschicht verzichtet werden kann und ein kompakter Schichtaufbau erzielt wird.

Es ist von Vorteil, dass die blasgeformte Struktur bzw. der Vorformling eine Außenschicht aufweist, wobei die Außenschicht vorzugsweise die äußere Schicht umschließt. Dies bewirkt einen Schutz der äußeren Schicht bzw. erlaubt eine größere Funktionsvielfalt des Rohrs. Die Außenschicht kann die äußerste Schicht sein. Mit Vorteil umfasst die Außenschicht ein Polyolefin und insbesondere ein Polyethylen oder ein - insbesondere schlagzäh modifiziertes - Polypropylen. Das Polyolefin der Außenschicht bewirkt, dass eine gute Haftung mit der äußeren, olefinhaltigen Schicht erzielt wird. Das Polyethylen bzw. Polypropylen bewirkt, dass die blasgeformte Struktur auch bei niedrigen Temperaturen eine relativ gute Schlagzähigkeit aufweist. Es ist möglich, dass die Außenschicht an der äußeren Schicht anliegt. Es ist möglich, dass eine zusätzliche Schicht, beispielsweise eine Adhäsionsschicht, zwischen der Außenschicht und der äußeren Schicht befindlich ist. Der Gewichtsanteil des Polyolefins bzw. Polyethylens bzw. Polypropylens der Außenschicht beträgt vorzugsweise wenigstens 30 bzw. 50 bzw. 70 bzw. 90 %.

Die Außenschicht kann ein Polyamid, insbesondere ein aliphatisches Polyamid und vorzugsweise ein PA11 oder PA12 aufweisen. Die Außenschicht umfassend ein Polyamid umschließt vorzugsweise eine äußere Schicht, welche bevorzugt einen Haftvermittler aufweist. Im Falle einer Außenschicht umfassend ein Polyamid weist die innere Schicht vorzugsweise ein Polyolefin- bzw. Polypropylen-Regenerat auf. Der Anteil des Regenerats beläuft sich vorzugsweise auf wenigstens 30 bzw 50 bzw. 70 bzw. 90 Gew.%.

Es ist bevorzugt, dass die Außenschicht bzw. äußere Schicht bzw. die äußerste Schicht der Vorformlingswand bzw. der Strukturwand ein thermoplastisches Elastomer aufweist. Das thermoplastische Elastomer umfasst vorzugsweise ein Olefin. Mit Vorteil umfasst die äußere Schicht ein thermoplastisches Elastomer auf Olefinbasis und/oder ein olefinhaltiges thermoplastisches Vulkanisat. Das thermoplastische Elastomer bewirkt eine Erhöhung der Flexibilität des Rohrs, sodass das Rohr beispielsweise Volumenänderungen des Fluids bzw. Temperiermediums kompensieren kann. Insbesondere Wasser neigt zu nicht unerheblichen Volumenänderungen, welche durch entsprechend flexible Schichten aufgefangen werden können. So schützt die äußere Schicht die innere Schicht vor Rissen. Vorteilhaft an thermoplastischen Elastomeren umfassend ein Olefin ist, dass diese gut an dem Polyolefin der inneren Schicht haften. Hierdurch wird insbesondere eine Delamination effektiv vermieden. Das olefinhaltige thermoplastische Vulkanisat umfasst vorzugsweise eine Mischung aus Polypropylen und Ethylen-Propylen-Dien-Kautschuk (EPDM) und wird bevorzugt unter dem Begriff "Santoprene" vertrieben. Der Gewichtsanteil des thermoplastischen Elastomers an der äußeren Schicht beträgt vorzugsweise wenigstens 30 bzw. 50 bzw. 70 bzw. 90 %.

Im Falle einer Außenschicht umfassend ein Olefin ist es von Vorteil, dass die äußere Schicht ein Polyolefin bzw. Polypropylen bzw. Polyolefin-Regenerat bzw. Polypropylen-Regenerat aufweist. Der Gewichtsanteil des Polyolefins bzw. Polypropylens bzw. Polyolefin-Regenerats bzw. Polypropylen-Regenerats an der äußeren Schicht beläuft sich vorzugsweise auf wenigstens 30 bzw. 50 bzw. 70 bzw. 90 %. Im Falle einer Außenschicht umfassend ein Olefin ist es von Vorteil, dass die innere Schicht ein jungfräuliches Polyolefin bzw. Polypropylen - zu bevorzugt wenigstens 30 bzw. 50 bzw. 70 bzw. 90 Gew.% - umfasst. Hierdurch können für die innere Schicht gut definierte Eigenschaften bereitgestellt werden.

Die blasgeformte Struktur bzw. der Vorformling kann eine Haftvermittlerschicht und/oder eine Adhäsionsschicht umfassen. Dies bewirkt eine bessere Haftung der Schichten aneinander, wodurch der Delaminationsgefahr beim Blasformen entgegengewirkt wird. Aufgrund der stellenweise sehr starken Ausdehnung der Vorformlingswand ist die Gefahr insbesondere in diesen Bereichen großer Ausdehnung relativ hoch, wobei allerdings mithilfe einer Haftvermittlerschicht bzw. Adhäsionsschicht dem entgegengewirkt werden kann. Die Haftvermittlerschicht ist vorzugsweise zwischen der inneren Schicht und der äußeren Schicht angeordnet. Mit Vorteil ist die Adhäsionsschicht zwischen der äußeren Schicht und der Außenschicht befindlich. Es ist sehr bevorzugt, dass die Haftvermittlerschicht und/oder die Adhäsionsschicht ein Polyolefin umfasst. Mit Vorteil beträgt der Gewichtsanteil des Polyolefins an der Haftvermittlerschicht bzw. der Adhäsionsschicht wenigstens 50 bzw. 70 bzw. 90 %. Es ist sehr von Vorteil, wenn die Haftvermittlerschicht bzw. die Adhäsionsschicht ein Additiv zur Erhöhung der Haftvermittlung bzw. Adhäsion aufweist. Das Additiv zur Erhöhung der Haftvermittlung bzw. Adhäsion ist vorzugsweise Maleinsäureanhydrid. Der Anteil des Additivs zur Erhöhung der Haftvermittlung bzw. Adhäsion an der Haftvermittlerschicht bzw. Adhäsionsschicht beträgt vorzugsweise wenigstens 0,5 bzw. 1 Gew.-%. Es ist bevorzugt, dass der Anteil des Additivs zur Erhöhung der Haftvermittlung/Adhäsion sich auf höchstens 10 bzw. 7 bzw. 5% des Gewichts der Haftvermittlerschicht bzw. Adhäsionsschicht beläuft.

Es ist sehr bevorzugt, dass der Vorformling ein Rohr und insbesondere ein extrudiertes bzw. koextrudiertes Rohr ist. Dies erlaubt eine effiziente, da kontinuierliche Herstellung der Vorformlinge. Insbesondere kann das koextrudierte Rohr im laufenden Prozess regelmäßig von einer Trennvorrichtung geschnitten werden, sodass in kurzer Zeit eine große Anzahl an Vorformlingen entsteht. Es ist bevorzugt, dass das koextrudierte Rohr in einen Querschnitt rund und insbesondere kreisrund ausgebildet ist.

Es ist möglich, dass die blasgeformte Struktur wenigstens drei Abgänge umfasst. Dies bewirkt, dass das Blasformen seinen Vorteil gegenüber dem Extrudieren ausspielt, weil das Blasformen komplexere Geometrien ermöglicht. Es ist bevorzugt, dass die blasgeformte Struktur mindestens drei Öffnungen umfasst, wobei die Öffnungen während des Blasformens und/oder nach dem Blasformen durch einen oder mehrere Trennschritte entstehen können. Zweckmäßigerweise zweigen die Abgänge der blasgeformten Struktur von einem Hauptvolumen der blasgeformten Struktur ab. Es ist möglich, dass jeder der Abgänge eine Öffnung aufweist.

Es ist bevorzugt, dass die blasgeformte Struktur eine Wanddicke von wenigstens 0,2 bzw. 0,3 bzw. 0,4 mm aufweist. Mit Vorteil beläuft sich die Wanddicke der blasgeformten Struktur auf höchstens 8,0 bzw. 6,0 bzw. 5,0 bzw. 4,0 mm.

Der Vorformling bzw. die blasgeformte Struktur kann eine Zwischenschicht umfassen, wobei die Zwischenschicht vorzugsweise wenigstens die innere Schicht umschließt. Es ist möglich, dass die Zwischenschicht einen Kunststoff und vorzugsweise einen Kunststoffschaum aufweist. Dies bewirkt eine Isolation des Temperiermittels, sodass die Umgebungstemperatur das Temperiermittel auf dem Weg zu einer zu temperierenden Komponente nicht zu sehr beeinflusst. Mit Vorteil wird die Zwischenschicht von der äußeren Schicht und/oder der Außenschicht umschlossen.

Die eingangs genannte Aufgabe wird gelöst durch eine blasgeformte Struktur, wobei die blasgeformte Struktur gemäß wenigstens einem der obigen Aspekte des erfindungsgemäßen Verfahrens hergestellt ist. Dies bewirkt, dass die blasgeformte Struktur von dem Herstellungsvorgang des Blasformens profitiert. Der Profit des Blasformens besteht insbesondere in der Möglichkeit, der blasgeformten Struktur besonders komplexe Geometrien zu verleihen. Der Herstellungsvorgang des Blasformens ist an der blasgeformten Struktur erkennbar. Zum einen finden sich regelmäßig Formgrate, die an der blasgeformten Struktur entstehen, wo zwei Teilformwerkzeuge des Blasformwerkzeugs aneinander stoßen oder ein Formwerkzeug einen Rand aufweist. Zum anderen ist bei blasgeformten Strukturen schon allein anhand Ihrer Geometrie erkennbar, dass lediglich das Blasformen eine derartige Struktur erzeugen kann. Dies ist beispielsweise bei allen blasgeformten Strukturen mit größerem Hohlraum der Fall, da die Herstellung mittels Spritzguss schlichtweg zu aufwendig wäre. Außerdem variieren die Wanddicken bei blasgeformten Strukturen weit mehr als im Falle von extrudierten oder spritzgegossenen Strukturen. Für den Fachmann ist es spätestens mithilfe von mikroskopischen Untersuchungen stets erkennbar, ob eine Struktur extrudiert, spritzgegossen oder blasgeformt wurde. Es ist bevorzugt, dass die innere Schicht und/oder die äußere Schicht und/oder die Außenschicht und/oder die Haftvermittlerschicht und/oder die Adhäsionsschicht integral ausgebildet sind.

Die eingangs genannte Aufgabe wird gelöst durch die Verwendung einer nach wenigstens einem der Aspekte erfindungsgemäß hergestellten blasgeformten Struktur zur Führung eines Temperiermediums, wobei das Temperiermedium vorzugsweise Wasser oder ein Öl umfasst. Dies bewirkt, dass die innere Schicht in Kontakt mit einem Temperiermedium kommt. Besonders vorteilhaft ist es, wenn die innere Schicht ein Polyolefin aufweist. Denn Polyolefine sind chemisch beständig gegenüber praktisch allen Temperiermedien und insbesondere gegenüber ölbasierten bzw. wasserbasierten Temperiermedien. Außerdem können Temperiermedien recht warm werden, was allerdings einige Polyolefine und insbesondere einige Polypropylene gut vertragen.

Nachfolgend wird die Erfindung anhand von drei Ausführungsbeispielen und drei Figuren näher erläutert. Es zeigen
- Figur 1: einen Querschnitt durch einen erfindungsgemäßen Vorformling eines ersten Ausführungsbeispiels,
- Figur 2: einen Querschnitt durch einen erfindungsgemäßen Vorformling eines zweiten Ausführungsbeispiels und
- Figur 3: einen Querschnitt durch einen erfindungsgemäßen Vorformling eines dritten Ausführungsbeispiels.

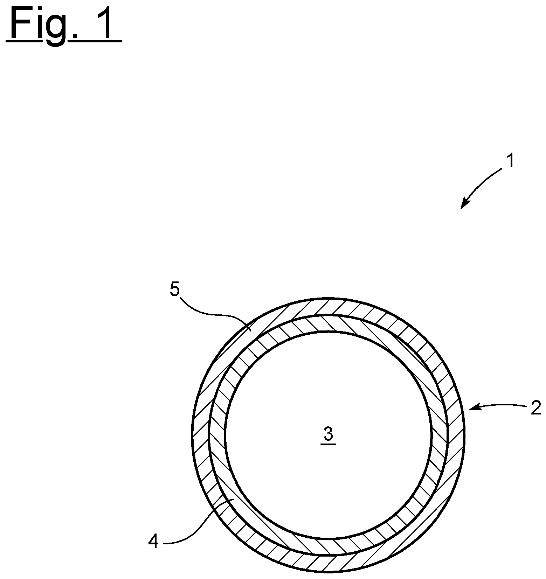

In Figur 1 ist ein erstes Ausführungsbeispiel eines erfindungsgemäßen Vorformlings 1 in Form eines Rohrs mit konstantem Querschnitt gezeigt. Der Vorformling 1 bzw. das Rohr des ersten Ausführungsbeispiels umfasst eine Vorformlingswand 2, welche einen Hohlraum 3 einschließt. Die Vorformlingswand 2 ist vorzugsweise im Querschnitt ringförmig und insbesondere kreisringförmig ausgebildet.

Der Vorformling 1 bzw. das Rohr bzw. die Vorformlingswand 2 des ersten Ausführungsbeispiels umfasst eine innere Schicht 4 und eine äußere Schicht 5. Vorzugsweise umschließt die äußere Schicht 5 die innere Schicht 4. In diesem Ausführungsbeispiel liegt die äußere Schicht 5 an der inneren Schicht 4 an. Es ist möglich, dass die äußere Schicht 5 zugleich die äußerste Schicht der Vorformlingswand 2 bzw. des Vorformlings 1 ist. In diesem Ausführungsbeispiel ist die innere Schicht 4 zugleich die innerste Schicht der Vorformlingswand 2 bzw. des Vorformlings 1.

Die innere Schicht 4 umfasst vorzugsweise einen Kunststoff, weiter vorzugsweise ein Polyolefin und insbesondere ein Polypropylen. Bei dem Polyolefin der inneren Schicht 4 handelt es sich bevorzugt um ein Regenerat.

Die äußere Schicht 5 mag einen Kunststoff, vorzugsweise ein thermoplastisches Elastomer und weiter vorzugsweise ein thermoplastisches Elastomer auf Olefinbasis und/oder ein olefinhaltiges thermoplastisches Vulkanisat umfassen. Gemäß einer Ausführungsform ist das thermoplastische Elastomer der äußeren Schicht 5 ein thermoplastisches Elastomer der Marke Santoprene bzw. eine Polypropylen-EPDM-Mischung.

Gemäß einer anderen Variante des ersten Ausführungsbeispiels weist die äußere Schicht 5 ein Polyethylen, insbesondere ein HDPE, auf. Gemäß einer weiteren Variante des ersten Ausführungsbeispiels weist die äußere Schicht 5 ein Polypropylen, insbesondere ein schlagzähmodifiziertes Polypropylen, auf.

Es ist sehr bevorzugt, dass der Vorformling 1 mittels Koextrusion hergestellt wird. Sowohl das thermoplastische Elastomer auf Olefinbasis als auch das olefinhaltige thermoplastische Vulkanisat umfassen ein Olefin bzw. Polyolefin, sodass die äußere Schicht 5 gut an der inneren Schicht 4 haftet. Hierdurch wird ein stoffschlüssiger, gut haftender Verbund aus der inneren Schicht 4 und der äußeren Schicht 5 erzielt. Dies gilt umso mehr, als das bei der Koextrusion beide Kunststoffe im schmelzflüssigen Zustand zueinander in Kontakt gebracht werden.

Der Vorformling 1 des ersten Ausführungsbeispiels wird nach der Koextrusion und nach einem Zurechtschneiden in eine Blasform eingebracht. Zweckmäßigerweise wird ein Ende des Vorformlings 1 geschlossen, was auf verschiedenste Art und Weise möglich ist. Der Vorformling 1 wird dann in der hier nicht dargestellten Blasform im Hohlraum 3 mit einem Gasdruck, insbesondere mit einem Luftdruck beaufschlagt, sodass der Vorformling 1 sich an eine Innenseite der Blasform anschmiegt und deren Form als blasgeformte Struktur annimmt. Die blasgeformte Struktur kann beispielsweise ein Tank, ein Rohr mit veränderlichen Querschnitt in axialer Richtung oder ein Verteilerrohr sein. Das Verteilerrohr kann beispielsweise eine Mehrzahl an Abgängen aufweisen.

Die blasgeformte Struktur umfasst eine Strukturwand, welche aus der Vorformlingswand während des Blasvorgangs entstanden ist. Die aus Gründen der Übersichtlichkeit hier nicht dargestellte Strukturwand umfasst in diesem Ausführungsbeispiel eine innere Schicht und eine äußere Schicht, wobei die innere Schicht der Strukturwand zweckmäßigerweise aus der inneren Schicht der Vorformlingswand 2 hervorgegangen ist. Vorzugsweise ist die äußere Schicht der Strukturwand aus der äußeren Schicht der Vorformlingswand 2 entstanden. Aufgrund der guten Haftung zwischen der inneren Schicht 4 und der äußeren Schicht 5 des Vorformlings 1 blieb der Haftverbund dieser beiden Schichten 4, 5 auch während des Blasformens bestehen, sodass eine Delamination vermieden wurde.

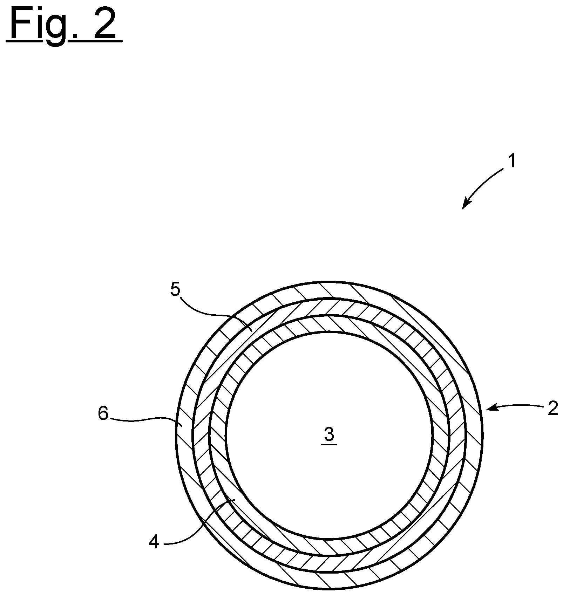

In Figur 2 ist ein zweites Ausführungsbeispiel eines erfindungsgemäßen Vorformlings 1 gezeigt. Es ist möglich, dass der Vorformling 1 bzw. die Vorformlingswand 2 neben den Schichten 4, 5 zusätzlich noch eine Außenschicht 6 umfasst. Die Außenschicht 6 kann die äußere Schicht 5 umschließen. Es ist möglich, dass die Außenschicht 6 an der äußeren Schicht 5 anliegt. Mit Vorteil ist die innere Schicht 4 die innerste Schicht. Vorzugsweise ist die äußere Schicht 5 die äußerste Schicht.

Die innere Schicht 4 des zweiten Ausführungsbeispiels weist bevorzugt ein Polyolefin, weiter bevorzugt ein Polypropylen und besonders bevorzugt ein jungfräuliches Polypropylen auf. Gemäß einer ersten Variante des zweiten Ausführungsbeispiels umfasst die äußere Schicht 5 bevorzugt ein Polyolefin, weiter bevorzugt ein Polypropylen und besonders bevorzugt ein Polypropylen-Regenerat. Die äußere Schicht 5 kann zur Verstärkung beispielsweise Glasfasern aufweisen.

Mit Vorteil umfasst die Außenschicht 6 des zweiten Ausführungsbeispiels der ersten Variante einen Kunststoff, weiter vorzugsweise ein Polyolefin und insbesondere ein Polyethylen, vorzugsweise ein HDPE. Alternativ kann die Außenschicht 6 ein thermoplastisches Elastomer und weiter vorzugsweise ein thermoplastisches Elastomer auf Olefinbasis und/oder ein olefinhaltiges thermoplastisches Vulkanisat aufweisen. Gemäß einer weiteren Alternative umfasst die Außenschicht 6 überwiegend ein Polypropylen.

Bei einer zweiten Variante des zweiten Ausführungsbeispiels umfasst die äußere Schicht 5 einen Haftvermittler und die Außenschicht 6 ein - vorzugsweise aliphatisches - Polyamid, beispielsweise ein PA11 oder PA12.

Der Vorformling 1 des zweiten Ausführungsbeispiels kann auf dieselbe oder eine ähnliche Art wie der Vorformling 1 aus Figur 1 dem Blasformen unterworfen werden.

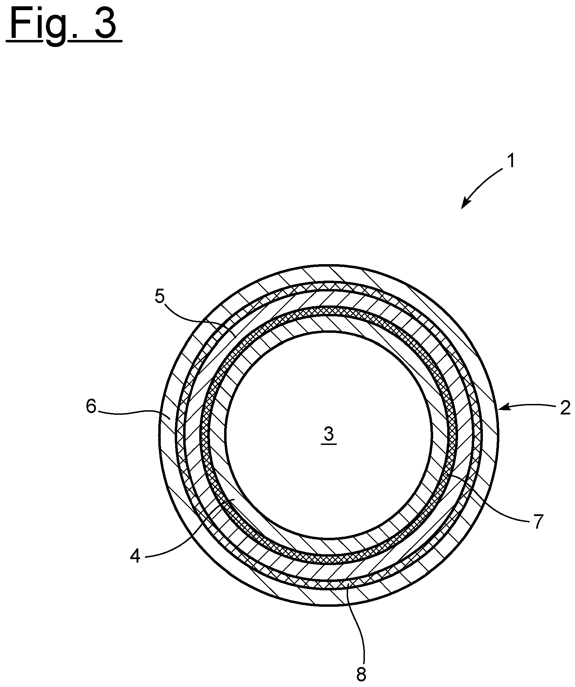

In Figur 3 ist ein drittes Ausführungsbeispiel eines erfindungsgemäßen Vorformlings 1 gezeigt. Der Vorformling 1 des dritten Ausführungsbeispiels umfasst im Vergleich zum zweiten Ausführungsbeispiel zusätzlich noch eine Haftvermittlerschicht 7 und/oder eine Adhäsionsschicht 8.

Es ist bevorzugt, dass die Haftvermittlerschicht 7 zwischen der inneren Schicht 4 und der äußeren Schicht 5 angeordnet ist. Mit Vorteil liegt die Haftvermittlerschicht 7 an der inneren Schicht 4 und/oder an der äußeren Schicht 5 an. Vorzugsweise umfasst die Haftvermittlerschicht 7 ein Material, welches besser an der inneren Schicht 4 und/oder an der äußeren Schicht 5 haftet als die äußere Schicht 5 an der inneren Schicht 4. Die Haftvermittlerschicht 7 umfasst vorzugsweise einen Kunststoff, und insbesondere ein Polyolefin. Es ist besonders bevorzugt, dass die Haftvermittlerschicht 7 einen Haftvermittler umfasst. Der Haftvermittler der Haftvermittlerschicht 7 kann beispielsweise Maleinsäureanhydrid sein. Der Anteil des Maleinsäureanhydrids kann zum Beispiel 3 Gew.% an der Haftvermittlerschicht 7 betragen. Es ist bevorzugt, dass die Haftvermittlerschicht 7 eine Schichtdicke aufweist, welche geringer ist als eine Schichtdicke der inneren Schicht 4, der äußeren Schicht 5 und/oder der Außenschicht 6.

Es ist bevorzugt, dass die Adhäsionsschicht 8 zwischen der äußeren Schicht 5 und der Außenschicht 5 angeordnet ist. Mit Vorteil liegt die Adhäsionsschicht 8 an der äußeren Schicht 5 und/oder an der Außenschicht 6 an. Vorzugsweise umfasst die Adhäsionsschicht 8 ein Material, welches besser an der äußeren Schicht 5 und/oder an der Außenschicht 6 haftet als die äußere Schicht 5 an der Außenschicht 6. Die Adhäsionsschicht 8 umfasst vorzugsweise einen Kunststoff, und insbesondere ein Polyolefin. Es ist besonders bevorzugt, dass die Adhäsionsschicht 8 einen Haftvermittler umfasst. Der Haftvermittler der Adhäsionsschicht 8 kann beispielsweise Maleinsäureanhydrid sein. Der Anteil des Maleinsäureanhydrids kann zum Beispiel 3 Gew.% an der Adhäsionsschicht 8 betragen. Es ist bevorzugt, dass die Adhäsionsschicht 8 eine Schichtdicke aufweist, welche geringer ist als eine Schichtdicke der inneren Schicht 4, der äußeren Schicht 5 und/oder der Außenschicht 6.

### Bezugszeichenliste

- 1: Vorformling
- 2: Vorformlingswand
- 3: Hohlraum von 1
- 4: Innere Schicht von 1, 2
- 5: Äußere Schicht von 1, 2
- 6: Außenschicht von 1, 2
- 7: Haftvermittlerschicht von 1, 2
- 8: Adhäsionsschicht von 1, 2

## Patentansprüche

1. Verfahren zur Herstellung blasgeformter Strukturen, wobei ein Vorformling (1) bereitgestellt wird, wobei der Vorformling (1) einen Hohlraum (3) einschließt und eine den Hohlraum (3) begrenzende Vorformlingswand (2) aufweist, wobei der Vorformling (1) in eine Blasform eingebracht und zu einer blasgeformten Struktur ausgebildet wird, wobei die blasgeformte Struktur eine Strukturwand aufweist,
**dadurch gekennzeichnet, dass**
die Vorformlingswand bzw. die Strukturwand eine innere Schicht (4) und eine äußere Schicht (5) umfasst.

2. Verfahren nach Anspruch 1, wobei die Strukturwand aus der Vorformlingswand (2) entstanden ist, wobei vorzugsweise die innere Schicht der Strukturwand aus der inneren Schicht (4) der Vorformlingswand (2) und/oder die äußere Schicht der Strukturwand aus der äußeren Schicht (5) der Vorformlingswand (2) entstanden ist.

3. Verfahren nach Anspruch 1 oder 2, wobei die innere Schicht (4) der Vorformlingswand (2) bzw. der Strukturwand ein Polyolefin und insbesondere ein Polypropylen aufweist.

4. Verfahren nach einem der Ansprüche 1 bis 3, wobei die Vorformlingswand (2) bzw. Strukturwand wenigstens 30 bzw. 40 bzw. 50 Gew.% eines Polyolefins und insbesondere eines Polypropylens aufweist.

5. Verfahren nach einem der Ansprüche 1 bis 4, wobei die Vorformlingswand (2) bzw. Strukturwand lediglich zwei Schichten (4, 5) umfasst.

6. Verfahren nach einem der Ansprüche 1 bis 5, wobei die blasgeformte Struktur bzw. der Vorformling (1) eine Außenschicht (6) aufweist, wobei die Außenschicht (6) bevorzugt die äußere Schicht (5) umschließt.

7. Verfahren nach einem der Ansprüche 1 bis 6, wobei der Vorformling (1) ein Rohr, insbesondere ein koextrudiertes Rohr, ist.

8. Verfahren nach einem der Ansprüche 1 bis 7, wobei die blasgeformte Struktur wenigstens drei Abgänge umfasst.

9. Blasgeformte Struktur, wobei die blasgeformte Struktur nach einem Verfahren gemäß wenigstens einem der Ansprüche 1 bis 8 hergestellt ist.

10. Verwendung einer nach wenigstens einem der Ansprüche 1 bis 9 hergestellten blasgeformten Struktur zur Führung eines Temperiermediums, wobei das Temperiermedium vorzugsweise Wasser oder ein Öl umfasst.
